# EUROPEAN PATENT APPLICATION

(11) **EP 1 949 795 A1**
(43) Date of publication of application: **30.07.2008**
(21) Application number: 07100661.3
(22) Date of filing: 17.01.2007
(51) Int. Cl.: A23L 1/00, A23L 1/22, A23L 1/221, A23L 1/228, A23L 1/237

(54) **Seasoning**

(71) Applicant: UNILEVER N.V., 3013 AL Rotterdam (NL)
(72) Inventor: Achterkamp, Georg, 74074 Heilbronn (DE); Kohlus, Reinhard, 74074 Heilbronn (DE)
(74) Representative: Tjon, Hon Kong Guno

(57) **Abstract**

The present invention provides granules of a seasoning aid in a granular form, comprising at least two of salt, sugar, starch/flour, monosodium glutamate, fat/oil, and integrated herein particulates comprising taste and aroma imparting substances that are substantially enclosed from the outside. The granules may be contained in a grinding apparatus. The invention further relates to a process for seasoning a dish, comprising the step wherein the granules according to the invention are ground on to a dish.

## Description

### Field of the invention

The present invention relates to a granular seasoning agent comprising a flavouring component, preferably an encapsulated component. The invention further relates to a grinder comprising such granules and a process for seasoning a dish.

### Background of the invention

During seasoning, the use of several taste and aroma imparting substances is commonly used as an additive to several dishes. Among these, salt, pepper, and a plethora of herbs and spices can be mentioned. Fresh herbs and spices can't be kept very long, because of rotting. Culturing of these herbs often is burdensome, time, labour and space consuming and dependent on weather and climate conditions. Therefore, many of those additives are to be purchased in a dried form, or a powder. In this way the additives can be stored for a relatively long time.

In addition to seasoning by these single herbs and spices, other seasoning aids are used, that can be added to a dish during or after preparation, for adding flavour. Flavour is intended to comprise both taste and aroma. Seasoning aids generally comprise one or more of salt, taste enhancer (monosodium glutamate, MSG), sugars, herbs, spices, flavourants, starch or starch derivative, fat and other components. Several physical forms of seasoning aids are known, such as pressed or extruded cubes, tablets, granules, agglomerates or powders. Seasoning aids can be added e.g. to the dish as such, or after crumbling of the aid into the dish.

During the process of seasoning a dish, in general the consumer may appreciate the sensation of smelling the aromas of the seasoning products used. These aromas ideally may closely resemble the aromas developed when fresh herbs and spices are used. In this way, the consumer may experience that good material is added to a dish, providing him a high quality meal.

However, a problem with the products comprising herbs and spices is that during the process of drying of the herbs and spices, and/or storage of the herbs and spices or the products comprising them, the quality of such components deteriorates. This is due to the influence of outside like oxidation or the evaporation of volatiles from the seasoning product. Volatiles are intended to mean compounds that can be smelled upon evaporation, such as e.g. top notes.

The prior art discloses several examples or documents that relate to seasoning a dish with material comprising volatiles.

A pepper grain is stable during storage. Upon grinding, compounds comprising taste and aroma's are released. This provides the sensation of using fresh material and preparing a high quality dish.

WO 01/17372 A1 discloses a process to prepare a delivering system for the controlled release of flavour or fragrance compounds. The resulting glassy granules comprise a matrix material containing a volatile flavour or fragrance compound or composition finely divided therein.

US patent 4.232.047 discloses seasoning granules comprising encapsulating material from protein and/or starch, forming a glassy matrix, and micro phases containing a flavouring material. The process to produce these granules may comprise a grinding step. Release of the flavours is provided by hydration of the granules. In this way seasoning particles are provided with a longer shelf life than natural herbs and spices.

International application WO 94/09308 discloses a process to incorporate a volatile component, e.g. a seasoning component, into a matrix, comprising: forming a melt comprising said volatile component and said matrix, and solidifying said melt under a pressure sufficient to prevent substantial volatilization of said volatile component. A granule that comprises a matrix material from e.g. sugar, further comprising a volatile encapsulate is also disclosed.

It is clear, of course, that pepper grains can only be used to provide the flavour of pepper. The products from the latter two publications, when added to the dish, slowly release their volatile content to the dish. Grinding of the material does hardly release any flavour from the granules. There is a need therefore, for a seasoning product in which the flavouring product remains uniform over time. This is to be understood that both intensity and composition remain fairly uniform over storage as well as usage. This means that flavour deterioration upon storage should be limited. It is furthermore desired that such seasoning can be made with a variety of flavours. Additionally, the use of which product directly provides the consumer a sensation of using fresh material, in this way preparing a high quality dish, and which seasoning product provides a defined seasoning profile.

### Summary of the invention

This aim is, at least partly, met by a granule comprising:
a) a matrix, comprising at least two of salt, sugar, starch/flour, monosodium glutamate, and fat/oil/polyol, and integrated herein
b) a flavouring component comprising taste and/or aroma imparting substances that are substantially enclosed from the outside.

### Detailed description of the invention

The granule according to the invention does not need to have a particular shape. Its shape may be a mere result of the production process used. This production process is not limited to the production process of granulation. The granule according to the invention therefore can be produced by e.g. granulation, agglomeration, extrusion, or any other form suitable to produce a seasoning product according to the invention resembling a granule. Although it is stated that at least two of the mentioned components are present in the seasoning concentrate, preferably there are three or even four components present in the seasoning aid in a granular form.

In a preferred aspect of the invention, matrix (a) may comprise two or more of the following components in the amounts as indicated below. Al percentages are in % per weight of the final granule.

| **matrix (a)** | |
|---|---|
| Salt | 30-70% |
| Sugars | 5-20% |
| Fat/oil/polyol | 7-15% |
| Starch/Flour | 2-15% |
| Monosodium Glutamate | 10-45% |

Component (b) may comprises one or more of the following components in the indicated amounts. All percentages are in % per weight of the component (b).

| **flavouring component (b)** | |
|---|---|
| Spices, flavours (preferably including volatile top notes and/or oxidation-sensitive flavour components), colorants, vegetables and/or herb powders. | 0.1-100%, preferably 4-80%, more preferably 10-50%, most preferably 20-30% |

Suitable taste and aroma imparting substances can comprise for example one or more of ingredients like spices, like pepper, flavours, flavouring oils, like lemon oil or garlic oil, extracts from herbs or vegetables, or wine, vegetable powder, herb powder, like garlic, etc. and herb pieces and vegetable pieces that may be visible. In a further aspect, the invention relates to a granule according to the invention wherein the taste and aroma imparting substances comprise volatile components.

The taste and aroma imparting substances are preferably enclosed, in order to offer protection against influences from the outside, like oxygen, that may deteriorate the material resulting in a loss of quality. Furthermore, it is aimed at, that evaporation of volatiles and aromas is (strongly) reduced, compared to when such volatiles are not enclosed.

The taste and aroma imparting substances may be present in the flavouring component (b) in the form of particulates. Preferably they are incorporated in a matrix of the particulate. Suitable material to enclose the taste and aroma imparting substances is e.g. a glassy matrix comprising a carbohydrate, such as e.g. maltodextrin or trehalose. The particles comprising a matrix may suitably be produced by extrusion or prilling techniques. Particulates that may be used according to the invention are these commercially produced by Firmenich S.A, and may be of the type of e.g. Flexarome. According to the invention, the particulates (b) are enclosed in the seasoning concentrate (a).

An alternative way to enclose the flavouring material is encapsulation in relatively small capsules, from e.g. yeast. An example of such a particle is e.g the Thermarome-type particle produced by Firmenich S.A. These capsules subsequently contribute to a larger particulate, e.g. by incorporation in a matrix of flavouring component (b) or by agglomeration of the capsules. This larger particulate is integrated in the matrix (a). Alternatively, the capsules or agglomerates of capsules may be directly integrated in the particle matrix (a). The encapsulation of the taste and aroma imparting substance functions as an enclosure means from influences from the outside.

In an alternative way, in stead of the flavouring component (b) being present in the matrix in an encapsulated form, this component (b) may also be present dispersed in the matrix material (a) as such. In such case, the matrix material (a) provides the protection against the environment.

Preferably, at least 80%wt. of the particulates (b) have a size that may range from 0.02-5, preferably from 0.5-5 mm, preferably from 0.5-2 mm. These particulates (b) may be present in the particle of the invention in an amount of from 0.1-50%wt., preferably from 0.5-20%wt. more preferably from 0.5-10%wt., most preferably from 1-5%wt.

As will be substantiated in more detail below, the granule according to the invention is suitably used by grinding it. For this reason, the size of the granule should be of such a size that is suitable to be ground in a conventional hand-held grinder similar to e.g. a pepper grinder. A size is preferred wherein at least 80% by weight of the granules of the invention have a dimension of at least 500 m, preferably at least 1 mm and smaller than 6 mm, preferably smaller than 4 mm, as determined by sieve analysis. However, depending on the granulation technique used, the length of the granule may be greater than the diameter.

When separate particles are present, e.g. a seasoning aid and a flavouring granule, a separation of the two types of granules may appear in a grinder. The result may be that the ratio of ground seasoning aid and ground particulates containing taste and aroma imparting substances becomes out of balance. Thus, preferably, only one type of granule is present, wherein the particulates comprising taste and aroma imparting substances are integrated in the seasoning aid granules. This embodiment shows the advantage that always a defined ratio of seasoning aid and particles containing taste and aroma imparting substances is provided upon use. In this way, the seasoning profile does not vary substantially over time.

As stated above, it is preferred that the granules according to the present invention are ground upon use. The granules according to the invention can also be added directly to a dish without grinding, however, the striking seasoning experience may be less intense. When ground, particulates containing taste and aroma imparting substances will release their flavouring content. The result of this grinding is a powdery seasoning mixture, comprising both the seasoning aid and the released taste and aroma imparting substances. Grinding can be applied by a grinding apparatus, or pulverizing apparatus such as a apparatus resembling a pepper mill or a mortar or any other apparatus as known in the art to crush and/or mill the granules of the invention.

Preferably the granules according to the invention are ground by a mill. Such a mill may resemble for example a pepper-mill. Therefore, in a further aspect, the invention also relates to a grinding apparatus containing the mixture according to the invention.

Furthermore, the invention relates to the use of the granules according to the invention in a grinding apparatus, e.g. to season a dish.

As becomes clear form the description above, the granules according to the invention provide the possibility to store a seasoning material (preferably one with volatile flavour components) over a certain time, without or with at least a strong reduction of the unwanted loss in quality of the taste and aroma imparting substances. Upon use of the granules by grinding, a seasoning is provided that can be experienced as fresh, due to the release of the taste and aroma imparting substances and of the top notes present in it. The invention therefore further relates to a process for seasoning a dish, comprising the step wherein the mixture according to the invention is ground on to a dish.

The present invention mainly focuses on the application for the purpose of seasoning. However, the use of granules according to the invention as a concentrate for a bouillon, a broth a soup etc. is not excluded from the scope of the invention.

### Example

The recipe given below was granulated using a basket extruder Bextruder BX 150 ex Bepex Leingarten Germany, into granules of 2.0mm diameter and ca.4mm length. An untrained panel of regular consumer was asked to assess the smell of the granules as such (100g on a plate), in a freshly opened contained and after milling by a seasoning grinder. Out of a group of 8 test persons all assessed the granules on the plate and in the container as bland without a garlic impression. After milling in a conventional pepper mill all found an intense and clear garlic smell to be present.

| Component | % |
|---|---|
| Monosodium glutamate | 26.3 |
| NaCl | 52.7 |
| Sucrose | 8.6 |
| Corn starch native | 9.2 |
| Cold swelling starch | 0.7 |
| Citric acid | 0.5 |
| Flexarome Flavour encapsulates (Garlic) (product from Firmenich) | 2 |

## Claims

1. Granules comprising
a) a matrix, comprising at least two of salt, sugar, starch/flour, monosodium glutamate, fat/oil, polyol and integrated herein
b) a flavouring component comprising taste and aroma imparting substances that are substantially enclosed from the outside.

2. Granules according to claim 1, wherein the taste and aroma imparting substances according to claim 1 under b) comprise one or more of ingredients like spices, flavours, flavouring oils, herb pieces, vegetable pieces, herb powder, vegetable powder, extracts from herbs or from vegetables, lemon oil, wine, garlic oil or garlic.

3. Granules according to claim 1 or 2, wherein the taste and aroma imparting substances according to claim 1 under b) comprise volatile components.

4. Granules according to anyone of the claims 1 to 3, wherein the granules are granulated, agglomerated or extruded.

5. Granules according to anyone of the claims 1 to 4, wherein the taste and aroma imparting substances according to claim 1 under b) are present in a matrix.

6. Granules according to claim 5, wherein the flavouring component according to claim 1 under b) are made by extrusion or prilling techniques.

7. Granules according to anyone of the claims 1 to 5, wherein the taste and aroma imparting substances according to claim 1 under b) are present in capsules or agglomerated capsules.

8. Granules according to anyone of the claims 1 to 7, wherein at least 80%wt of the granules have a dimension of at least 500 µm, preferably at least 1 mm and smaller than 6 mm, preferably smaller than 4 mm, as determined by sieve analysis.

9. Grinding apparatus containing the granules according to anyone of the claims 1 to 8.

10. Use of the granule according to anyone of the claims 1 to 8 in a grinding apparatus.

11. Process for seasoning a dish, comprising the step wherein the granule according to anyone of the claims 1 to 10 is ground on to a dish.
